# EUROPEAN PATENT APPLICATION

(11) **EP 4 693 737 A1**
(43) Date of publication of application: **11.02.2026**
(21) Application number: 23931703.5
(22) Date of filing: 09.08.2023
(51) Int. Cl.: H01Q 1/50, H01R 31/06

(54) **FEED ADAPTER DEVICE FOR CONNECTING TO ANTENNA**

(30) Priority: 07.04.2023 CN 202310370088
(71) Applicant: Quectel Wireless Solutions Co., Ltd., Shanghai 201601 (CN)
(72) Inventor: HANG, Mingjun, Shanghai 201601 (CN); SHI, Jin, Shanghai 201601 (CN)
(74) Representative: Murgitroyd & Company
(86) International application number: PCT/CN2023/111885
(87) International publication number: WO 2024/207653

(57) **Abstract**

A feed adapter device for connecting to an antenna, the device comprising a feed conversion member for electrically connecting to a nano-silver antenna in an insulated, transparent and hard substrate, wherein the feed conversion member is partially configured to attach to the insulated, transparent and hard substrate, the feed conversion member is a flexible member, and the impedance of the feed conversion member is configured for reaching a preset impedance of an antenna body together with the impedance of the nano-silver antenna. The feed adapter device can be electrically connected to the nano-silver antenna in the insulated, transparent and hard substrate, and realizes characteristic impedance matching of the antenna body, thereby ensuring that an antenna signal is transmitted with low loss to a radio frequency module end via the feed adapter device.

## Description

### CROSS REFERENCE TO RELATED APPLICATION

The present disclosure claims the priority to Chinese Patent Application No. 202310370088.5, filed with the Chinese Patent Office on April 07, 2023 and entitled "Feed adapter device for connecting to antenna", which is incorporated in its entirety herein by reference.

### TECHNICAL FIELD

The present disclosure relates to the technical field of communication, and in particular to a feed adapter device for connecting to an antenna.

### BACKGROUND

As the communication technology develops in recent years, the Internet of Vehicles technology has shown a trend towards maturity. Internet of Vehicles demands a wide network bandwidth and a high transmission rate. In the scenario of human to vehicle communication, vehicle to vehicle communication or vehicle to everything communication, a vehicle is in urgent need of a novel antenna type. An automotive glass coverage rate has increased in tune with the times, and the concept of an automotive glass antenna has also been formulated. Telematics box (T-BOX) antenna layout or shark fin antenna layout is applied to most of automobiles. T-BOX is installed inside the vehicle and thus shields signals, while the shark fin antenna layout affects the design of a panoramic sunroof. At present, the glass antenna is capable of solving the above problems, but it is necessary to solve the problem of antenna feed between different medias and ensure substantially low loss during signal transmission in order to design the glass antenna. However, a feed method using a T-BOX antenna or a shark fin antenna is incapable of feeding the glass antenna.

### SUMMARY

An objective of embodiments of the present disclosure is to provide a feed adapter device for connecting to an antenna. The feed adapter device can be electrically connected to a nano-silver antenna in an insulating transparent hard substrate to match characteristic impedance of an antenna body, thereby ensuring that an antenna signal is transmitted with substantially low loss to a radio frequency module end through the feed adapter device.

In order to solve the above technical problem, the present disclosure uses the following technical solution:
the present disclosure provides a feed adapter device for connecting to an antenna. The feed adapter device includes: a feed converter for being electrically connected to a nano-silver antenna in an insulating transparent hard substrate, where the feed converter is partially used for being attached and connected to the insulating transparent hard substrate, the feed converter is a flexible member, and impedance of the feed converter is used for reaching preset impedance of an antenna body together with impedance of the nano-silver antenna.

In a process of implementing the above solution, the feed adapter device includes the feed converter electrically connected to the nano-silver antenna. Moreover, in a mounting process, one part of the feed converter is attached to the insulating transparent hard substrate, and the other part of the feed converter protrudes out of the insulating transparent hard substrate. The flexible member is used as the feed converter. Thus, the feed converter is unitarily flexible and easy to deform, so as to ensure reliability of connection to the insulating transparent hard substrate. The feed converter and the nano-silver antenna can be designed into a whole. Moreover, the total impedance of the above two parts reaches a preset requirement of impedance of the antenna body, thereby achieving a feed connection mode between the feed adapter device and the nano-silver antenna in the insulating transparent hard substrate. Moreover, it is unnecessary to additionally control other transmission impedance lines, and the feed adapter device and the nano-silver antenna match characteristic impedance of the antenna body in the insulating transparent hard substrate. In this way, transmission loss of an antenna signal is reduced to the greatest extent.

In an implementation, the feed converter includes a conductive component and a feed conversion body, the conductive component is arranged on the feed conversion body, and the conductive component is used for being electrically connected to the nano-silver antenna.

In a process of implementing the above solution, the feed converter includes the feed conversion body and the conductive component. The conductive component is arranged on the feed conversion body, and is used for being electrically connected to the nano-silver antenna. Thus, when the feed adapter device is connected to the nano-silver antenna, the feed converter and the nano-silver antenna are of an integral structure, an electrical connection between the feed converter and the nano-silver antenna is completed, and the feed adapter device and the nano-silver antenna match the characteristic impedance of the antenna body in the insulating transparent hard substrate. In this way, the transmission loss of the antenna signal is reduced to the greatest extent.

In an implementation, at least one glue receiving hole is provided on the feed conversion body.

In a process of implementing the above solution, the at least one glue receiving hole is provided on the feed conversion body. Ultraviolet ray (UV) glue, i.e. shadowless glue, may be hot-melted in the glue receiving hole when the feed conversion body is attached and connected to the insulating transparent hard substrate such that stability between the feed conversion body and the insulating transparent hard substrate can be enhanced.

In an implementation, a flexible printed circuit (FPC), a modified polyimide (MPI) FPC or a liquid crystal polymer (LCP) FPC is used as the feed converter.

In a process of implementing the above solution, the FPC, the MPI FPC or the LCP FPC may be used as the feed converter, and the feed converter is used as the flexible member to ensure flexibility of the feed converter, and is more easily attached to the insulating transparent hard substrate. Moreover, when a double-layer structure is selected as the insulating transparent hard substrate, the feed converter is arranged in an interlayer of the insulating transparent hard substrate. The feed converter is easily arranged in the interlayer due to the flexibility of the feed converter, and may be pressed on the insulating transparent hard substrate. Sealing performance between the insulating transparent hard substrate and the feed converter may be ensured.

In an implementation, the insulating transparent hard substrate includes glass, the glass includes laminated glass, and the feed converter is partially located in an interlayer.

In a process of implementing the above solution, the insulating transparent hard substrate includes the glass, and the glass includes the laminated glass. The nano-silver antenna and part of the feed converter are arranged in the interlayer, such that stability between the feed converter and the laminated glass is improved. Moreover, the feed converter and the nano-silver antenna form a whole, and the total characteristic impedance of the two components reaches the preset impedance of the antenna body, thereby matching the impedance of the antenna body.

In an implementation, an electrical connection position between the conductive component and the nano-silver antenna is pressed on the feed conversion body at high temperature through an anisotropic conductive film.

In a process of implementing the above solution, the electrical connection position between the conductive component and the nano-silver antenna is pressed on the feed conversion body at high temperature through the anisotropic conductive film, such that stability of connection between the conductive component and the nano-silver antenna is ensured, the nano-silver antenna and the feed converter are of an integral structure, and the impedance of the antenna body is conveniently matched.

In an implementation, the electrical connection position between the conductive component and the nano-silver antenna is close to one side of the feed conversion body, so that the electrical connection position is located in an interlayer.

In a process of implementing the above solution, the electrical connection position between the conductive component and the nano-silver antenna is close to one side of the feed conversion body. Thus, when the feed conversion body is located in the interlayer of the glass, the electrical connection position between the conductive component and the nano-silver antenna may also be located in the interlayer, so as to protect the electrical connection position and ensure stability of the electrical connection position.

In an implementation, the electrical connection position between the conductive component and the nano-silver antenna on the feed conversion body is plated with gold.

In a process of implementing the above solution, since oxidation resistance of the gold is extremely high, an internal circuit may be protected from corrosion. Moreover, conductivity of the gold is extremely high, such that signal loss may not be caused. Moreover, the gold has extremely high ductility, and may enlarge a contact area of the electrical connection position between the nano-silver antenna and the conductive component on the feed conversion body under a proper pressure, such that contact resistance is reduced, the impedance of the antenna is matched, and signal transmission efficiency is improved.

In an implementation, the conductive component includes a first conductive sheet and a second conductive sheet, and a gap is provided between the first conductive sheet and the second conductive sheet.

In a process of implementation the above solution, the conductive component includes the first conductive sheet and the second conductive sheet, and the gap is provided between the first conductive sheet and the second conductive sheet, such that radiation of the antenna is ensured. Resonance ranging from 3300 MHz to 6000 MHz may be tuned by the gap, such that the impedance of the antenna is adjusted to satisfy matching requirements of impedance of a whole formed by the nano-silver antenna and the feed converter and impedance of a coaxial cable.

In an implementation, the feed converting apparatus further includes a coaxial cable. The coaxial cable is electrically connected to the first conductive sheet and the second conductive sheet separately.

In a process of implementing the above solution, the feed converting apparatus further includes the coaxial cable. The coaxial cable is electrically connected to the first conductive sheet and the second conductive sheet separately, such that a signal received by the nano-silver antenna is transmitted to a radio frequency module end.

### BRIEF DESCRIPTION OF THE DRAWINGS

In order to more clearly illustrate the technical solutions of the embodiments of the present disclosure, the accompanying drawings required for the embodiments of the present disclosure are briefly introduced below. It should be understood that the following accompanying drawings show merely some embodiments of the present disclosure, and therefore should not be regarded as the limitations to the scope. Those of ordinary skill in the art can further derive other relevant accompanying drawings from these accompanying drawings without making creative efforts.
FIG. 1 is a schematic structural diagram showing that a feed adapter device is mounted in an insulating transparent hard substrate according to an embodiment of the present disclosure;
FIG. 2 is a schematic diagram of an exploded structure of a feed adapter device and an insulating transparent hard substrate according to an embodiment of the present disclosure; and
FIG. 3 is a schematic diagram of a partially enlarged structure in FIG. 1.

Reference numerals: 1-nano-silver antenna; 11-first antenna branch; 12-second antenna branch; 13-third antenna branch; 2-conductive component; 21-first conductive sheet; 22-second conductive sheet; 3-feed converter; 31-glue receiving hole; 32-feed conversion body; 4-coaxial cable; 5-Fakra adapter; 6-insulating transparent hard substrate; 61-polyethylene terephthalate (PET) film; 62-optical shadowless glue; 7-first connection gap; 8-second connection gap; and 9-third connection gap.

### DETAILED DESCRIPTION OF THE EMBODIMENTS

The technical solutions in the embodiments of the present disclosure will be described below in combination with the accompanying drawings in the embodiments of the present disclosure.

It should be noted that similar numerals and letters denote similar items in the following accompanying drawings, and thus, once an item is defined in one accompanying drawing, the term does not need to be further defined and explained in the subsequent accompanying drawings. Moreover, in the description of the present disclosure, the terms "first", "second", etc. are merely used to distinguish the description, and cannot be understood as indicating or implying relative importance.

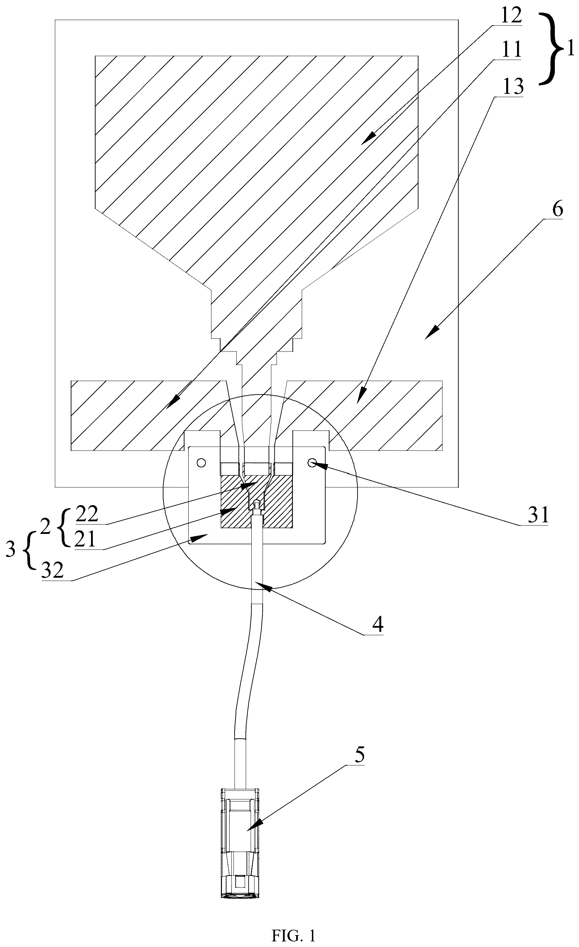

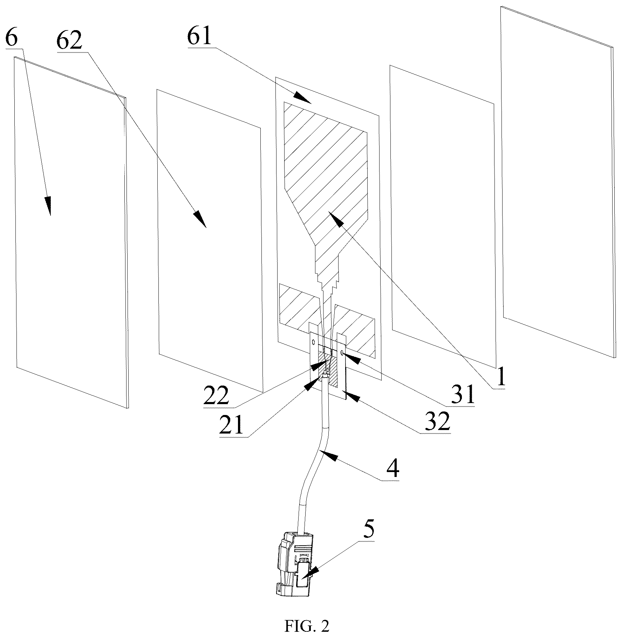

As shown in FIGs. 1 and 2, a feed adapter device for connecting to an antenna is introduced in an embodiment of the present disclosure. The feed adapter device includes a feed converter 3 electrically connected to a nano-silver antenna 1. One part of the feed converter 3 is attached to an insulating transparent hard substrate 6, and the other part of the feed converter protrudes out of the insulating transparent hard substrate 6. An attachment area between the feed converter 3 and the insulating transparent hard substrate 6 may be adjusted according to actual requirements. The feed converter 3 is made from a flexible material to ensure reliability of connection to the insulating transparent hard substrate 6, such that the nano-silver antenna 1 and the feed converter 3 are designed into a whole. Moreover, total impedance of these two components reaches a preset requirement of impedance of an antenna body, thereby achieving a feed connection mode between the feed adapter device and the nano-silver antenna 1 in the insulating transparent hard substrate 6, and completing matching of characteristic impedance between the feed adapter device and the nano-silver antenna 1 in the insulating transparent hard substrate 6. Moreover, it is unnecessary to additionally control other transmission impedance lines, thereby reducing transmission loss of an antenna signal to the greatest extent.

Moreover, the feed adapter device in the embodiment of the present disclosure has the advantages of low-loss signal adapting, stable mounting, easy mass production and low cost, and well solves the problem of feeding of the nano-silver antenna in the insulating transparent hard substrate.

Optionally, the nano-silver antenna 1 is made of a nano-silver wire. Since the nano-silver wire may ensure sufficient fineness, the nano-silver antenna may reduce an influence on a viewing angle of the insulating transparent hard substrate 6 when the nano-silver antenna 1 is arranged on the insulating transparent hard substrate 6, thereby ensuring light transmittance of the insulating transparent hard substrate 6.

Optionally, the antenna body includes the nano-silver antenna and the feed converter, and optimal performance of the antenna body may be achieved through impedance matching. Preset impedance of the antenna body may be 50 ohms, but it is extremely difficult to reach the specific 50 ohms in an actual test process. Thus, the preset impedance of the antenna body in the embodiment of the present disclosure may have a preset range. That is, the total impedance of the nano-silver antenna 1 and the feed converter 3 approximates to 50 ohms. Certainly, the nano-silver antenna 1 has dielectric loss to some extent in the insulating transparent hard substrate 6. Thus, the total impedance of a system of the nano-silver antenna 1, the feed converter 3 and the insulating transparent hard substrate 6 may be designed to approximate to 50 ohms in some cases.

Optionally, the nano-silver antenna 1 may be designed to include at least one first antenna branch 11, a second antenna branch 12 and a third antenna branch 13. The nano-silver antenna 1 is designed into three antenna branches, thereby increasing a frequency bandwidth of the nano-silver antenna 1, ensuring a frequency coverage range of the nano-silver antenna 1, and supporting design requirements of multi-mode and multi-scenario antennas.

Optionally, each antenna branch of the nano-silver antenna 1 is formed by a nano-silver wire in a grid shape, and the shape of each antenna branch may be irregular, which is not specifically limited in the embodiment of the present disclosure.

Optionally, the feed adapter device is not limited to being electrically connected to a single nano-silver antenna 1 in the present disclosure, or may be electrically connected to a plurality of nano-silver antennas 1, and each nano-silver antenna 1 may receive different signals, for example, global positioning system (GPS) signals, wireless fidelity (WIFI) signals.

As shown in FIG. 1, in an implementation, the feed converter 3 includes a conductive component 2 and a feed conversion body 32. The conductive component 2 is arranged on the feed conversion body 32, and is used for being electrically connected to the nano-silver antenna 1. Thus, when the feed adapter device is connected to the nano-silver antenna 1, the feed converter 3 and the nano-silver antenna 1 are of an integral structure, an electrical connection between the feed converter 3 and the nano-silver antenna 1 is completed, the feed adapter device and the nano-silver antenna 1 match characteristic impedance of the antenna body in the insulating transparent hard substrate 6, and the transmission loss of the antenna signal is reduced to the greatest extent.

As shown in FIG. 1, optionally, the conductive component 2 includes a first conductive sheet 21 and a second conductive sheet 22. The first conductive sheet 21 and the second conductive sheet 22 may be designed as symmetrical structures, or may be designed as asymmetrical shapes clearly, the first conductive sheet 21 is used for electrically connecting the first antenna branch 11 and the third antenna branch 13, and the second conductive sheet 22 is electrically connected to the second antenna branch 12.

Optionally, the first conductive sheet 21 and the second conductive sheet 22 are embedded in the feed conversion body 32, and a copper foil layer may be used as the conductive component 2 of the embodiment of the present disclosure. The copper foil layer has flexibility and may be made into various thicknesses and widths. Apart from flexibility, the copper foil layer further has the characteristics of hardness and smoothness, and is suitable for being applied in occasions requiring dynamic flexing.

Optionally, the feed adapter device is not limited to establishing electrical connections between the conductive element and branches of the plurality of nano-silver antennas; it may also be configured without any such electrical connection.

Optionally, an area of the feed converter 3 may be increased appropriately, an area of the conductive component 2 may be increased, and a source patch circuit may be designed on the increased area of the conductive component 2, thereby improving applicability of the feed adapter device.

As shown in FIG. 1, in an implementation, at least one glue receiving hole 31 is provided on the feed conversion body 32. Ultraviolet ray (UV) glue, i.e. shadowless glue, may be hot-melted in the glue receiving hole 31 when the feed conversion body 32 is attached and connected to the insulating transparent hard substrate 6. Thus, stability between the feed conversion body 32 and the insulating transparent hard substrate 6 can be enhanced.

Optionally, two glue receiving holes 31 are provided on the feed conversion body 32, and the two glue receiving holes 31 are provided on two sides of the feed conversion body 32 respectively. When the feed conversion body 32 is attached and connected to the insulating transparent hard substrate 6, the UV glue is hot-pressed in the two glue receiving holes 31 separately, such that stability between the feed conversion body 32 and the insulating transparent hard substrate 6 is further improved.

In an implementation, a flexible printed circuit (FPC), a modified polyimide (MPI) FPC or a liquid crystal polymer (LCP) FPC may be used as the feed converter 3. Since the FPC, the MPI FPC and the LCP FPC are flexible members, flexibility of the feed converter 3 is ensured, and the feed converter is more easily attached to the insulating transparent hard substrate 6. Moreover, when a double-layer structure is selected as the insulating transparent hard substrate 6, the feed converter 3 is arranged in an interlayer of the insulating transparent hard substrate 6, the feed converter 3 is easily arranged in the interlayer due to the flexibility of the feed converter 3, and may be pressed on the insulating transparent hard substrate 6. Sealing performance between the insulating transparent hard substrate 6 and the feed converter 3 may be ensured.

Optionally, the feed converter 3 may be made from other flexible materials.

In an implementation, the insulating transparent hard substrate 6 includes glass, the glass includes laminated glass and a film located in an interlayer. The nano-silver antenna 1 and part of the feed converter 3 are arranged in the interlayer, such that stability between the feed converter 3 and the laminated glass is improved. Moreover, the feed converter 3 and the nano-silver antenna 1 form a whole, and the total impedance of the two components reaches the preset impedance of the antenna body and matches the impedance of the antenna body.

As shown in FIG. 2, optionally, glass may be selected as the insulating transparent hard substrate 6, and the glass may include two glass sheets and a film located in the two glass sheets. The film is made of polyethylene glycol terephthalate (PET), and has a thickness of 0.76 mm, and a PET film 61 is selected as the film, such that the requirements of the fabrication process of the nano-silver wire are satisfied. The two glass sheets may be bonded through optical shadowless glue 62. According to the present disclosure, the nano-silver antenna 1 and part of the feed converter 3 are hot-pressed in an interlayer of the two glass sheets through the PET film 61. Moreover, a flexible material is selected as the feed converter 3, and the feed converter is more easily hot-pressed in the interlayer due to the flexibility of the feed converter.

Optionally, the glass may further include single-layer glass. When the single-layer glass is selected, the nano-silver antenna 1 may be printed on one side of the single-layer glass, and the feed converter 3 is connected to the single-layer glass through hot pressing.

Optionally, the glass may be flat or curved, and the glass is applicable to a front windshield or a rear windshield of an automobile, or is applicable to other places clearly.

Optionally, the insulating transparent hard substrate 6 may be made from transparent plastic.

In an implementation, an electrical connection position between the conductive component 2 and the nano-silver antenna 1 in the laminated glass is hot-pressed on the feed conversion body 32 at high temperature through an anisotropic conductive film. In this way, stability of connection between the conductive component 2 and the nano-silver antenna 1 is ensured, the nano-silver antenna 1 and the feed converter 3 are of an integral structure, and the impedance of the antenna body is conveniently matched.

Optionally, the first conductive sheet 21 and the first antenna branch 11 and the third antenna branch 13 are hot-pressed on the feed conversion body 32 at high temperature through an anisotropic conductive film, the second conductive sheet 22 and the second antenna branch 12 are hot-pressed on the feed conversion body 32 at high temperature through an anisotropic conductive film, and finally, the first conductive sheet 21, the second conductive sheet 22, the first antenna branch 11, the second antenna branch 12, the third antenna branch 13 and the feed conversion body 32 are of an integral structure. Thus, on one hand, impedance matching of the antenna body is satisfied. On the other hand, a connection structure between the above components is stabler, and is easily hot-pressed in an interlayer of double-layer glass to ensure stability.

As shown in FIG. 1, in an implementation, an electrical connection position between the conductive component 2 and the nano-silver antenna 1 is close to one side of the feed conversion body 32. Thus, when the feed conversion body 32 is located in the interlayer of the glass, the electrical connection position between the conductive component 2 and the nano-silver antenna 1 may also be located in the interlayer to protect the electrical connection position and ensure stability of the electrical connection position.

Optionally, the electrical connection position between the conductive component 2 and the nano-silver antenna 1 may be close to an upper side of the feed converter 3, or may be close to a lower side, a left side or a right side in some cases. The electrical connection position between the conductive component and the nano-silver antenna is not specifically limited in the present disclosure.

In an implementation, the electrical connection position between the conductive component 2 and the nano-silver antenna 1 on a surface of the feed conversion body 32 is plated with gold. Since oxidation resistance of the gold is extremely high, an internal circuit may be protected from corrosion. Moreover, conductivity of the gold is extremely high, such that signal loss may not be caused. Moreover, the gold has extremely high ductility, and may enlarge a contact area of the electrical connection position between the nano-silver antenna 1 and the conductive component 2 on the feed conversion body 32 under a proper pressure, such that contact resistance is reduced, the impedance of the antenna is matched, and signal transmission efficiency is improved.

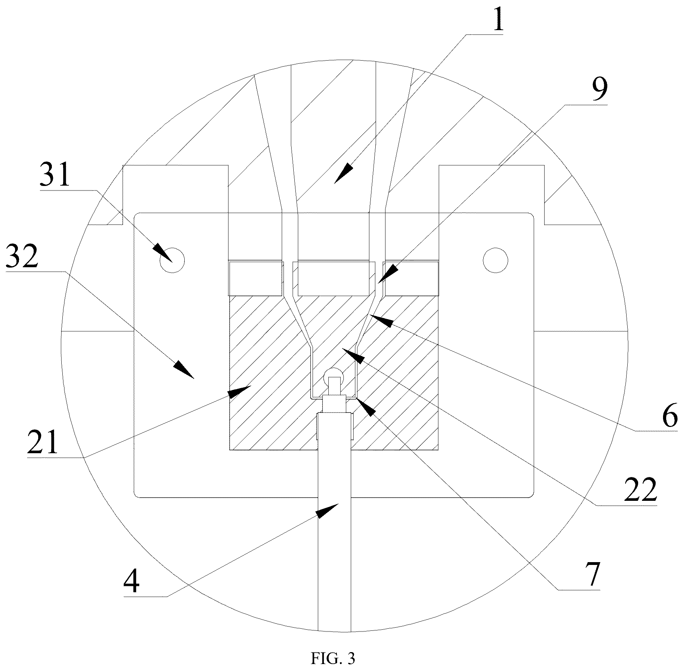

As shown in FIG. 3, in an implementation, the conductive component 2 includes a first conductive sheet 21 and a second conductive sheet 22, and a gap is provided between the first conductive sheet 21 and the second conductive sheet 22, such that radiation of the antenna body is ensured. Resonance ranging from 3300 MHz to 6000 MHz may be tuned by the gap, such that the impedance of the antenna body is adjusted to satisfy matching requirements of impedance of a system formed by the nano-silver antenna 1, the conductive component 2 and the feed converter 3 and impedance of a coaxial cable 4.

As shown in FIG. 3, optionally, the gap includes three first connection gaps 7, two second connection gaps 8 and two third connection gaps 9. The three first connection gaps 7 form an unsealed quadrangle, the two second connection gaps 7 are located on two sides of the second conductive sheet 22 respectively, and are in communication with two of the first connection gaps 7 respectively, a width of the second connection gaps 8 is gradually widened in a direction away from the first connection gaps 7, and the two third connection gaps 9 are in communication with the two second connection gaps 8 respectively. Thus, resonance ranging from 3300 MHz to 6000 MHz may be tuned by the gap.

Optionally, when structures of the first conductive sheet 21 and the second conductive sheet 22 are changed, the gap between the first conductive sheet 21 and the second conductive sheet 22 is also changed.

As shown in FIGs. 1 and 2, in an implementation, the antenna further includes a coaxial cable 4. The coaxial cable 4 is electrically connected to the first conductive sheet 21 and the second conductive sheet 22 separately, thereby transmitting a signal received by the nano-silver antenna 1 to a radio frequency module end.

Optionally, a Fakra adapter 5 is provided at one end of the coaxial cable 4 away from the nano-silver antenna 1, and is detachably connected to the coaxial cable 4, such that the antenna may be in plug fit with different radio frequency module ends. Clearly, the radio frequency module end may be a radio frequency module end on an automobile, or may be a radio frequency module end on other fields, such as a ship.

Optionally, the coaxial cable 4 may be selected with a standard impedance 50-ohm impedance, such that the impedance of the antenna body is matched more easily, and signal transmission efficiency of the coaxial cable 4 is ensured. The coaxial cable 4 includes a core wire layer and a shielding layer. The shielding layer is located at a periphery of the core wire layer, the shielding layer is welded to the first conductive sheet 21, and the core wire layer is welded to the second conductive sheet 22.

Optionally, since two glue receiving holes 31 are provided on two sides of the feed converter 3 respectively, the coaxial cable 4 is located outside the insulating transparent hard substrate 6 when the coaxial cable 4 is welded to the conductive component 2. The UV glue in the glue receiving holes 31 may increase a tensile force of the coaxial cable 4 borne by the feed converter 3, and further ensure the stability between the feed converter 3 and the insulating transparent hard substrate 6.

What are described above are merely the embodiments of the present disclosure and are not used to limit the scope of protection of the present disclosure, and various modifications and changes can be made to the present disclosure by those skilled in the art. Any modifications, equivalent substitutions, improvements, etc. within the spirit and principles of the present disclosure should fall within the scope of protection of the present disclosure.

What are described above are merely the particular implementations of the present disclosure, but the scope of protection of the present disclosure is not limited to the particular implementations of the present disclosure, and any changes or substitutions that are readily conceivable to those skilled in the art within the technical scope disclosed in the present disclosure fall within the scope of protection of the present disclosure. Thus, the scope of protection of the present disclosure should be subject to the scope of protection of the claims.

It should be noted that relational terms herein such as first and second are merely used to distinguish one entity or operation from another entity or operation without necessarily requiring or implying any actual such relation or order between such entities or operations. Moreover, the terms "comprise", and "include" or their any other variations are intended to cover non-exclusive inclusions, such that a process, a method, an article, or a device that includes a series of elements not only includes those elements, but also includes other elements that are not explicitly listed, or further includes elements inherent to the process, the method, the article, or the device. Without more restrictions, an element defined by the phrase "comprise a..." or "include a..." does not exclude the existence of other identical elements in the process, the method, the article, or the device that includes the elements.

### INDUSTRIAL APPLICABILITY

The feed adapter device for connecting to an antenna according to the present disclosure can be electrically connected to the nano-silver antenna in the insulating transparent hard substrate, and matches characteristic impedance of the antenna body, such that it is ensured that an antenna signal is transmitted to a radio frequency module end through the feed adapter device with substantially low loss. The feed adapter device for connecting to an antenna according to the present disclosure is applicable to the fields such as communication systems using antennas.

## Claims

1. A feed adapter device for connecting to an antenna, **characterized by** comprising:
a feed converter for being electrically connected to a nano-silver antenna in an insulating transparent hard substrate, wherein the feed converter is partially used for being attached and connected to the insulating transparent hard substrate, the feed converter is a flexible member, and impedance of the feed converter is used for reaching preset impedance of an antenna body together with impedance of the nano-silver antenna.

2. The feed adapter device according to claim 1, **characterized in that** the feed converter comprises a conductive component and a feed conversion body, the conductive component is arranged on the feed conversion body, and the conductive component is used for being electrically connected to the nano-silver antenna.

3. The feed adapter device according to claim 2, **characterized in that** at least one glue receiving hole is provided on the feed conversion body.

4. The feed adapter device according to any one of claims 1-3, **characterized in that** a flexible printed circuit FPC, a modified polyimide MPI FPC or a liquid crystal polymer LCP FPC is used as the feed converter.

5. The feed adapter device according to any one of claims 1-3, **characterized in that** the insulating transparent hard substrate comprises glass, the glass comprises laminated glass, and the feed converter is partially located in an interlayer.

6. The feed adapter device according to claim 2, **characterized in that** an electrical connection position between the conductive component and the nano-silver antenna is pressed on the feed conversion body at high temperature through an anisotropic conductive film.

7. The feed adapter device according to claim 6, **characterized in that** the electrical connection position between the conductive component and the nano-silver antenna is close to one side of the feed conversion body, so that the electrical connection position is located in an interlayer.

8. The feed adapter device according to claim 6 or 7, **characterized in that** the electrical connection position between the conductive component and the nano-silver antenna on the feed conversion body is plated with gold.

9. The feed adapter device according to claim 2, **characterized in that** the conductive component comprises a first conductive sheet and a second conductive sheet, and a gap is provided between the first conductive sheet and the second conductive sheet.

10. The feed adapter device according to claim 9, **characterized by** further comprising a coaxial cable, wherein the coaxial cable is electrically connected to the first conductive sheet and the second conductive sheet separately.
